(19) Europäisches Patentamt
European Patent Office
Office européen des brevets

(11) Publication number: 0 114 495 A2

(12) EUROPEAN PATENT APPLICATION

(21) Application number: 83307754.8

(22) Date of filing: 20.12.83

(51) Int. Cl.³: H 01 B 3/30
C 08 K 5/54

(30) Priority: 27.12.82 US 453432

(43) Date of publication of application: 01.08.84 Bulletin 84/31

(84) Designated Contracting States: DE FR GB

(71) Applicant: DOW CORNING CORPORATION
3901 S. Saginaw Road
Midland Michigan 48640(US)

(72) Inventor: Vincent, Gary Allen
3121 Bullock Creek Road
Midland Michigan(US)

(74) Representative: Laredo, Jack Joseph et al,
Elkington and Fife High Holborn House 52/54 High Holborn
London, WC1V 6SH(GB)

(54) **Anti-treeing additives.**

(57) A composition is disclosed comprising a polymeric component and an additive selected from the group consisting of

(a) $R_aSi\ (OX)_{4-a}$,

(b) a partial hydrolyzate of $R_aSi(OX)_{4-a}$,

(c) a partial cohydrolyzate of $R_aSi\ (OX)_{4-a}$ and $R_b'Si\ (OY)_{4-b}$, and

(d) a partial hydrolyzate condensation product of a siloxane and $R_aSi\ (OX)_{4-a}$

wherein R, X R', and Y are substituted or unsubstituted hydrocarbon radicals and at last one substituent per additive is an unsaturated hydrocarbon radical; and *a* and *b* have values of 0 to 3.

A method of stabilizing polymers against water and electrical treeing, which comprises adding the additive as defined above, is further disclosed.

EP 0 114 495 A2

Croydon Printing Company Ltd.

# ANTI-TREEING ADDITIVES

This invention relates to a composition comprising a polymeric component and an additive selected from the group consisting of

(a) $R_aSi(OX)_{4-a}$,

(b) a partial hydrolyzate of $R_aSi(OX)_{4-a}$,

(c) a partial cohydrolyzate of $R_aSi(OX)_{4-a}$ and $R'_bSi(OY)_{4-b}$, and

(d) a partial hydrolyzate condensation product of a siloxane and $R_aSi(OX)_{4-a}$

wherein R, X, R', and Y are substituted or unsubstituted hydrocarbon radicals and at least one substituent per additive is an unsaturated hydrocarbon radical; and a and b have values of 0 to 3.

This invention further relates to a method of stabilizing polymers against water and electrical treeing which comprises adding the additive as defined above.

Polymeric compositions are well-known and are used extensively as insulation materials for wire and cable. As an insulator, it is important the composition have various physical and electrical properties, such as resistance to mechanical cut through, stress crack resistance, and resistance to dielectric failure. Recent publications have indicated water tree growth and electrical tree growth in the insulation are particularly important problems since they are associated with, though not necessarily totally responsible for, dielectric failure.

An important application for an insulating material is in high voltage transmission and distribution cable, especially in direct buried underground service.

Unfortunately, the efficient use of polymeric compositions in high voltage cables is precluded by the degradation process called "treeing". Treeing is an electrical pre-breakdown process. The name is given to the damage, visually resembling trees, which results in a solid dielectric exposed to electrical stress. Treeing can occur and progress as a result of particle discharges, without discharges in the presence of moisture, and with impulse, ac or dc voltages.

It is generally believed two different types of trees exist. Trees which form in the presence of water, and in particular at low voltages, are called water or electrochemical trees. When water is absent, the trees which form are called electrical trees.

Although there are many theories concerning the initiation and growth of trees, there is virtual unanimity in the belief they start at an imperfection in the cable. This imperfection can be a small void or a piece of solid contamination.

Several organic additives have been discovered which are quite effective in retarding the growth of both types of trees. Acetophenone is perhaps one of the best known anti-treeing agents in existence. It is a product of the decomposition of dicumylperoxide which has found wide use as a curing agent to produce crosslinked polyethylene. The initial decreased treeing tendency of crosslinked polyethylene is a direct result of the existence of acetophenone in the former. Unfortunately, the effect is only temporary because the acetophenone diffuses out of the polyethylene with time; and the polymer's resistance to treeing becomes the same as uncrosslinked polyethylene.

The prevention of treeing has also been attempted by preparing super clean resin, the inclusion of fillers, and decreasing or eliminating the cable's exposure to steam during crosslinking.

Silicones have found limited use in the area of anti-treeing. Kato, et al. (U.S. Patent Number 3,956,420) discloses the use of a combination of ferrocene, and 8-substituted quinoline, and a silicone liquid to increase the dielectric strength of polyethylene and its voltage endurance in water. Ashcraft, et al. (U.S. Patent Number 4,144,202) inhibits water treeing in ethylene polymer compositions by employing organosilanes containing an epoxy radical. Ashcraft, et al. (U.S. Patent Number 4,263,458) further discloses the use of organosilanes containing C=N bonds to inhibit water treeing in ethylene polymers. Ashcraft et al. (Canadian Patent Number 1,103,915) further discloses the use of organosilanes containing C=O bonds to inhibit water treeing in ethylene polymers.

German Offenlegungsschrift Number 2,737,430 and U.S. Patent Number 4,299,713 disclose the addition of alkoxyalkoxysilanes to polyolefin insulation to prevent water tree formation. These patents further disclose the importance of the alkoxyalkoxysilane to inhibit treeing. U.S. Patent Number 4,332,957 discloses the use of phenoxy-alkoxy-substituted silanes as water tree and electrical tree retardant additives. U.S. Patent Number 3,553,348, British Patent Number 1,248,256, and British Patent Number 1,277,378 disclose treating mineral fillers with organosilanes and then adding them to the polymer to decrease the porosity of the composition. Japanese Patent Number Sho 56[1981]-92946 discloses the use of silicon grafted polyolefins in combination with propionates to inhibit

water treeing. Japanese Patent Number Sho 56[1981]-109494 discloses the use of diorganopolysiloxanes having a viscosity range of 30 to 500 centistokes to inhibit water treeing. This patent further discloses siloxanes modified with alkoxy groups have little effect upon water treeing.

As is evidenced by the prior art, treeing can be inhibited in two different ways. If the voids in the plastic are filled, there is slight improvement in resistance to treeing. If voltage stabilizers, such as acetophenone, are included in the polyethylene, the stabilizers are thought to trap and deactivate electrons, and thus inhibit treeing. Most, if not all, of the voltage stabilizers are mobile aromatic compounds. The mobility of the compound, however, can not be so great that it does not stay in the plastic. If it migrates to the surface, it evaporates, and its effectiveness is totally lost.

As evidenced by the data in the present application, it is theorized that the ideal composition should contain an additive which is mobile and sufficiently compatible (soluble) with the plastic so it can migrate to the voids and solid impurities which are the points of treeing initiation. By filling and surrounding these faults in the plastic, it retards the initiation of the trees; and by filling the tree channel as it is formed, it retards the growth of the trees. At the same time, the additive must be sufficiently nonvolatile to assure it stays in the plastic and does not evaporate.

It is thus an object of this invention to provide a composition comprising a polymeric component and an additive selected from the group consisting of

(a) $R_aSi(OX)_{4-a}$,

(b) a partial hydrolyzate of $R_aSi(OX)_{4-a}$,

(c) a partial cohydrolyzate of $R_aSi(OX)_{4-a}$ and $R'_bSi(OY)_{4-b}$, and

(d) a partial hydrolyzate condensation product of a siloxane and $R_aSi(OX)_{4-a}$

wherein R, X, R', and Y are substituted or unsubstituted hydrocarbon radicals and at least one substituent per additive is an unsaturated hydrocarbon radical; and

_a_ and _b_ have values of 0 to 3.

It is a further object of this invention to provide a method of stabilizing polymers against water and electrical treeing which comprising adding the additive as defined above.

In general, the polymeric component of the present invention can be any solid synthetic organic polymeric thermoplastic resin. Specific examples of suitable resins include polyolefins and copolymers thereof, vinyl, olefinvinyl copolymers, olefin-allyl copolymers, polyamides, acrylics, polystyrenes, cellulosics, polyesters, and fluorocarbons.

The polyolefins include solid polymers of olefins, particularly mono-alpha-olefins, which comprise from about two to about six carbon atoms, e..g., polyethylene, polypropylene, polybutene, polyisobutylene, poly(4-methyl pentane), and the like. Copolymers of ethylene, and other compounds interpolymerizable with ethylene such as butene-1, pentene-1, styrene, and the like, may be employed. In general, the copolymer will be comprised of 50 percent by weight or more of ethylene.

Suitable examples of vinyl polymers include polyvinyl chloride, polyvinyl acetate, vinyl chloride/vinyl acetate copolymers, polyvinyl alcohol, and polyvinyl acetal.

Suitable examples of olefin-vinyl copolymers include ethylene-vinyl acetate, ethylene-vinyl propionate, ethylene-vinyl isobutyrate, ethylene-vinyl alcohol, ethylene-methyl acrylate, ethylene-ethyl acrylate, ethylene-ethyl methacrylate, and the like. In general, the ethylene constitutes at least 25 percent by weight of the copolymer.

Specific examples of suitable olefin-allyl copolymers include ethylene-allyl benzene, ethylene-allyl ether, and ethylene-acrolein.

It is preferred, however, that the polymer be a polyolefin, with polyethylene being most preferred.

The additive of the present invention is selected from the group consisting of

(a) $R_aSi(OX)_{4-a}$,

(b) a partial hydrolyzate of $R_aSi(OX)_{4-a}$,

(c) a partial cohydrolyzate of $R_aSi(OX)_{4-a}$ and $R'_bSi(OY)_{4-b}$, and

(d) a partial hydrolyzate condensation product of a siloxane and $R_aSi(OX)_{4-a}$

wherein R, X, R', and Y are substituted or unsubstituted hydrocarbon radicals and at least one substituent per additive is an unsaturated hydrocarbon radical; and <u>a</u> and <u>b</u> have values of 0 to 3.

Examples of suitable substituted and unsubstituted hydrocarbon radicals for R, X, R', and Y are alkyl radicals such as the methyl, ethyl, propyl, butyl, amyl, cyclohexyl, decyl, dodecyl, and octadecyl radicals; alkenyl radicals such as the vinyl and allyl radicals; aryl radicals such as the phenyl and biphenyl radicals; alkaryl and aralkyl radicals such as the tolyl and benzyl radicals; and the corresponding substituted hydrocarbon radicals such as the chloropropyl, 3,3,3-trifluoropropyl,

dichlorophenyl, cyanobutyl, nitrophenyl, mercaptopropyl, carboxyethyl, and aminoisobutyl radicals. It is preferred, however, that R be an unsubstituted unsaturated hydrocarbon radical, with an aromatic radical being further preferred, and phenyl being optimal. It is also preferred that X, R', and Y be unsubstituted saturated hydrocarbon radicals, with an alkyl radical being further preferred. It is further preferred that X and Y be methyl radicals and R' be a propyl radical. It is also further preferred that a and b have values of 1.

The siloxane of the present invention can be composed of monoorganosiloxane units, diorganosiloxane units, and triorganosiloxane units. The siloxane can be either cyclic or linear. So far as is known at this time, the substituents on the siloxane are not critical for the purpose of this invention so long as the additive contains at least one unsaturated hydrocarbon substituent. Suitable examples of substituents are as defined above for R, X, R', and Y. It is preferred, however, that the siloxane be a polydimethylsiloxane.

As far as is known at this time, the order of mixing the components and the specific procedure employed is not critical for the purpose of this invention. The components may be mixed on a variety of apparatus including multi-roll mills, screw mills, continuous mixers, compounding extruders, and Banbury mixers.

The treeing resistance of the plastic is affected by the amount of additive present and the amount of unsaturation present. Additives having a higher percentage of unsaturated substituents will have increased electrical treeing resistance. Also, the more additive that is present, the more resistant to treeing the plastic

is. The amount of additive which would be used would be determined by at least three factors:

1. The level of tree resistance desired-normally this would be as high as possible.
2. The physical properties of the composition - Excessive silicone could result in a composition with insufficient integrity for the application. Excessive silicone could also adversely affect the molding process by causing slippage.
3. The economics of the composition - the more silicone that is used the more expensive the composition.

Based on these factors, it is recommended that the composition contain between one and 10 percent of the additive, with 1 to 5 percent preferred.

Minor amounts of other additives may also be employed in conventional amounts to obtain the desired results. Conventional antioxidants such as the hindered phenols, polyquinolines, and the like may be employed. Other ingredients which may be included are plasticizers, dyes, pigments, heat and light stabilizers, antistatic agents, and the like.

The compositions of the invention find particular utility in high voltage transmission and distribution cables but are useful in other electrical applications where a unique combination of enhanced water treeing and electrical treeing properties are needed.

Now in order that those skilled in the art may better understand how the present invention can be practiced, the following examples are given by way of illustration and not by way of limitation. All parts and

percents are by weight and all viscosities are measured at 25°C unless otherwise specified.

Example

Sample Preparation

Polyethylene beads were surface coated with 5 percent by weight of the additive to be evaluated. The wet beads were then fed into a twin screw extruder. The extrudate was cooled in a water bath, blow dried with an air knife, and cut into small beads with a string cutter. The beads were further mixed to improve the uniformity of the sample. The amount of fluid in the polyethylene was then determined by silicon analysis using atomic absorption. The analysis was performed by hardening via chilling a 10 gram sample of the beads. It was then ground into a powder and 300 mg. was analyzed for silicon. The nonuniformity of the compounding process and the relatively small analytical test sample size led to at least some degree of uncertainty as to the exact amount of silicone present.

The additives evaluated were

(A) Dow Chemical Company polyethylene (XD60007.06);

(B) 4.8 weight percent of a 1500 centistoke cohydrolyzate condensation product derived from 70 mole percent phenyltrimethoxysilane and 30 mole percent propyltrimethoxysilane;

(C) 3.9 weight percent of a 250 centistoke cohydrolyzate condensation product derived from 70 mole percent phenyltrimethoxysilane and 30 mole percent propyltrimethoxysilane;

(D) 4.3 weight percent of a 250 centistoke partial hydrolyzate product of phenyltrimethoxysilane;

(E) 2.1 weight percent of a 343 centistoke partial hydrolyzate product of phenyltrimethoxysilane;

(F) Dow Chemical Company polyethylene (XD60007.06);

(G) 5 weight percent of mineral oil;

(H) 2 weight percent of acetophenone;

(I) Dow Chemial Company polyethylene (XD60007.06);

(J) 4.3 weight percent of the solid hydrolysis/condensation product derived from phenyltrimethoxysilane;

(K) 5.5 weight percent of a 140 centistoke partial hydrolyzate/condensation product of phenyltrimethoxysilane and silanol endblocked polydimethylsiloxane. This test material was obtained by reacting approximately 0.7 moles of phenyltrimethoxysilane with 0.3 equivalents of the polydimethylsiloxane and 0.7 moles of water; and

(L) Union Carbide Corporation's 6202 NT product consisting essentially of polyethylene and approximately two weight percent of

$$H-\overset{H}{C}=N-\overset{H}{C}H_2CH_2CH_2Si(OCH_2CH_3)_3.$$

(M) USI (United States Industry) 31006 polyethylene.

All additives, except (H), acetophenone, were evaluated in polyethylene manufactured by the Dow Chemical Company. The acetophenone additive was evaluated in USI 31006 polyethylene.

Injection Molding of Samples

A single cavity injection mold was used and the molding temperatures were in the range of 375 to 500°F. The injection pressure ranged from 600 to 900 psi. The mold temperature ranged from 70 to 110°F and the cycle time varied from 45 to 60 seconds.

## Electrical Endurance Test

The treated plastic was injected around methylene chloride cleaned electrodes held in place by demountable electrode holders. Samples (B), (F), (H), (I), (J), (K), and (M) were injected around an electrode which was a steel phonograph needle having a point of 50±5 micrometers radius of curvature. Specifically, the steel phonograph needle electrode was a Dean #18 Filter Point Needle purchased from John Dean, Inc., Putnam, Connecticut. Samples (A), (C), (D), (E), and (G) were injected around a precision needle with a 5.0 μm radius of curvature obtained from the Ogura Jewel Industry Company, Inc., Tokyo, Japan.

The other electrode was a standard eighth inch steel dowel pin with one end ground to a number four grind micro surface. By adjusting the length of the electrodes protruding from the holders, an electrode spacing of 0.025 inches was established.

Following the formation of the samples by injection molding, they were x-rayed to permit identification and rejection of the ones in which the electrodes had moved during molding. Samples having approximately 0.025 ± 0.001 inch gap were selected for testing. The x-rays were taken by placing the sample in a Plexiglas® holder, positioning it over a Type 51 high contrast 4x5 inch Polaroid® film and then exposing the sample and film to x-rays. The pictures were then examined under a microscope. The molded sample itself was half an inch in diameter and three quarters of an inch long.

Samples (B), (F), (H), (I), (J), (K), and (M) were subjected to an electrical voltage of 30,000 volts. Samples (A), (C), (D), (E), and (G) were subjected to an

electrical voltage of 8,000 volts. The samples were immersed in oil to prevent flashover. The time to failure was recorded for each sample. Generally, 30 or more samples of each composition were required for statistical evaluation. The data were evaluated by use of the computer program described by G.C. Stone and J.F. Lawless' article entitled "The Application of Weibull Statistics to Insulation Ageing Tests", IEEE Trans. Electr. Insul., El-14, October, 1979, pp 233-239.

Water Treeing Test

The water treeing tests were done on injection molded samples approximately 1¼ inches high by 1 inch in diameter with an inner cavity approximately 3/4 inch in diameter. The bottom of the test sample had an intentional fault with a radius of curvature of approximately 10 micrometers. This point was located 0.025 inches from the outside bottom surface of the test sample. Prior to testing, the bottom of the sample was sprayed with conductive silver paint. The test was run in a rig which holds 10 samples. Each sample was charged with 3 ml of saturated aqueous sodium chloride solution containing a small amount of Triton® X-400 surfactant, stearyl benzyl dimethyl ammonium chloride manufactured by Rohm and Haas. A high voltage electrode was inserted in the salt solution in the test sample. The sample was placed in a small plastic cup containing a ground lead. A voltage of 10kV at 3kHz was applied to the high voltage electrode. Samples were tested in periods ranging from 10 to 400 hours. After the test, the fault was cut out of the test cell with a cork bore and placed immediately in a concentrated aqueous solution of methylene blue containing small amounts of ammonium hydroxide and Triton X-400. The sample was microtomed and the slice containing the point

of fault was placed on a glass slide, flooded with the methylene blue solution, and photomicrographed. The length of the trees were measured for an entire sample set.

It was observed that the additives enhanced polyethylene's resistance to water treeing. The water tree test was similar to the procedure described in U.S. Patent No. 4,144,202.

Dow Chemical Company polyethylene XD60007.06 has a density of 0.9195 g/cc and a melt index of 0.17 (ASTM D-1238 (E)). USI polyethylene 31006 has a density of 0.917 g/cc and a melt index of 0.25 (ASTM D-1238(E)). US Standard ASTM D-1238, which is used in the industry to determine the melt index for low density polyethylene is an extrusion test conducted at 190°C under 2160G (43.25 PSI).

Claims:

1. A composition comprising a polymeric component and an additive selected from the group consisting of

(a) $R_aSi(OX)_{4-a}$,
(b) a partial hydrolyzate of $R_aSi(OX)_{4-a}$,
(c) a partial cohydrolyzate of $R_aSi(OX)_{4-a}$ and $R'_bSi(OY)_{4-b}$, and
(d) a partial hydrolyzate condensation product of a siloxane and $R_aSi(OX)_{4-a}$

wherein R, X, R', and Y are substituted or unsubstituted hydrocarbon radicals and at least one substituent per additive is an unsaturated hydrocarbon radical; and <u>a</u> and <u>b</u> have values of 0 to 3.

2. A composition as defined in Claim 1 wherein R is an unsubstituted unsaturated hydrocarbon radical, and X, R', and Y are unsubstituted saturated hydrocarbon radicals.

3. A composition as defined in Claim 2 wherein the polymeric component is a polyolefin, R is an aromatic radical, and X, R', and Y are alkyl radicals.

4. A composition as defined in Claim 3 wherein the polyolefin is polyethylene, R is a phenyl radical, X and Y are methyl radicals, R' is a propyl radical, a and b have the values of 1, and the siloxane is a polydimethylsiloxane.

5. An electrical cable comprising the composition as defined in Claim 1.

6. An electrical cable comprising the composition as defined in Claim 2.

7. An electrical cable comprising the composition as defined in Claim 3.

8. An electrical cable comprising the composition as defined in Claim 4.

9. A method of stabilizing a polymer against water and electrical treeing which comprises adding to the polymer an additive selected from the group consisting of

(a) $R_aSi(OX)_{4-a}$,

(b) a partial hydrolyzate of $R_aSi(OX)_{4-a}$,

(c) a partial cohydrolyzate of $R_aSi(OX)_{4-a}$ and $R'_bSi(OY)_{4-b}$, and

(d) a partial hydrolyzate condensation product of a siloxane and $R_aSi(OX)_{4-a}$

wherein R, X, R', and Y are substituted or unsubstituted hydrocarbon radicals and at least one substituent per additive is an unsaturated hydrocarbon radical; and a and b have values of 0 to 3.